# FASCICULE DE BREVET EUROPEEN

(11) **EP 0 905 465 B1**
(45) Date de publication et mention de la délivrance du brevet: **24.09.2003**
(21) Numéro de dépôt: 98401638.6
(22) Date de dépôt: 01.07.1998
(51) Int. Cl.: F25D 29/00

(54) **Procédé et dispositif de pulvérisation séquentielle d'un liquide cryogénique, procédé et installation de refroidissement**
Vorrichtung und Verfahren zum sequentiel Sprühen eines kryogenen Fluidums , Verfahren und Vorrichtung zum Kühlen
Method and apparatus for sequential atomisation of a cryogenic liquid , method and installation for cooling

(30) Priorité: 01.08.1997 FR 9709910
(43) Date de publication de la demande: 31.03.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Germain, Jean-Pierre, 78180 Montigny le Bretonneux (FR); Dubreuil, Thierry, 78910 Boissets (FR)
(74) Mandataire: Mellul-Bendelac, Sylvie Lisette

(56) Documents cités:
- EP-A- 0 125 964
- EP-A- 0 611 933
- DE-A- 4 410 503
- US-A- 4 075 869
- US-A- 4 745 762
- US-A- 5 011 633
- US-A- 5 035 750
- US-A- 5 394 704
- GORMLEY T R: "a laboratory scale liquid nitrogen freezer" IRISH JOURNAL OF AGRICULTURAL RESEARCH, vol. 14, no. 2, 1975, pages 214-217, XP002059427

## Description

La présente invention concerne un procédé de pulvérisation séquentielle d'un liquide cryogénique, notamment de l'azote liquide.

L'invention s'applique plus particulièrement au refroidissement, au croûtage et à la congélation de produits alimentaires individuels sur leur ligne de production. Dans de telles applications, des buses, alimentées séquentiellement en azote liquide, assurent la pulvérisation d'azote liquide sur chaque produit alimentaire convoyé.

L'optimisation du transfert de frigories entre les jets d'azote liquide pulvérisé et les produits à refroidir conduit à choisir des dimensions de gouttes d'azote pulvérisé comprises entre environ 10 et 30 microns. Cette contrainte de dimension des gouttes se traduit par une contrainte sur la pression de l'azote liquide alimentant les buses de pulvérisation, qui doit également être comprise dans une certaine plage.

Cette contrainte en pression limite la baisse de la température de l'azote liquide alimentant les buses de pulvérisation. Or cette baisse peut conduire, elle aussi, à une augmentation de la capacité de refroidissement des jets de pulvérisation d'azote liquide produits.

On notera que dans ce domaine de la production de gouttelettes, le document EP-125 964 s'intéresse à la fourniture d'un brouillard de gouttelettes de diamètre contrôlé et efficace pour atteindre ensuite une bonne efficacité du procédé de refroidissement de matériaux visé.

L'invention a pour but de résoudre les problèmes mentionnés précédemment et, en particulier, de fournir un procédé de pulvérisation séquentielle d'azote liquide permettant d'augmenter de manière simple et économique la capacité de refroidissement des jets de pulvérisation produits, tout en satisfaisant aux exigences concernant le diamètre des gouttes produites.

A cet effet, l'invention a pour objet un procédé de pulvérisation séquentielle d'un liquide cryogénique, notamment de l'azote liquide, selon la revendication 1 .

Selon des modes particuliers de réalisation, le procédé peut comporter une ou plusieurs des caractéristiques suivantes :
le gaz de propulsion est à une température très supérieure à celle du liquide cryogénique, notamment au voisinage de la température ambiante, et
le gaz de propulsion et le liquide cryogénique sont de même composition.

L'invention a également pour objet un procédé de refroidissement d'objets, plus particulièrement de produits alimentaires, par pulvérisation sur ceux-ci d'un liquide cryogénique de refroidissement, notamment de l'azote liquide, caractérisé en ce qu'on utilise un procédé de pulvérisation tel que défini ci-dessus pour pulvériser le liquide cryogénique sur les objets transportés par des moyens de convoyage.

L'invention a également pour objet une installation de mise en oeuvre d'un procédé de refroidissement tel que défini ci-dessus, caractérisée en ce qu'elle comprend des moyens de convoyage des objets, une source de liquide cryogénique de refroidissement, une source de gaz de propulsion, la pression du gaz de propulsion étant supérieure à celle du liquide cryogénique, et un dispositif de pulvérisation séquentielle du liquide cryogénique de refroidissement, ce dispositif comprenant d'une part une canalisation dont une sortie est reliée à une entrée de moyens de pulvérisation orientés vers lesdits moyens de convoyage, et d'autre part des moyens de distribution raccordant sélectivement et séquentiellement une entrée de ladite canalisation aux sources de gaz et de liquide.

Selon un mode particulier de réalisation, les moyens de distribution comprennent au moins une électrovanne de distribution commandée par une unité de pilotage, et les moyens de pulvérisation comprennent une buse de pulvérisation.

L'invention a finalement pour objet un dispositif de pulvérisation séquentielle de liquide cryogénique pour une installation telle que définie ci-dessus, caractérisé en ce qu'il comprend d'une part une canalisation dont une sortie est reliée à une entrée de moyens de pulvérisation, et d'autre part des moyens de distribution adaptés pour raccorder sélectivement et séquentiellement une entrée de la canalisation à une source de liquide cryogénique et à une source de gaz de propulsion.

L'invention sera mieux comprise à la lecture de la description qui va suivre, donnée uniquement à titre d'exemple, et faite en se référant aux dessins annexés sur lesquels :
la figure 1 est une vue schématique en élévation d'une installation de refroidissement selon l'invention, et
la figure 2 regroupe deux chronogrammes illustrant comparativement les séquences d'ouverture des électrovannes de l'installation de la figure 1.

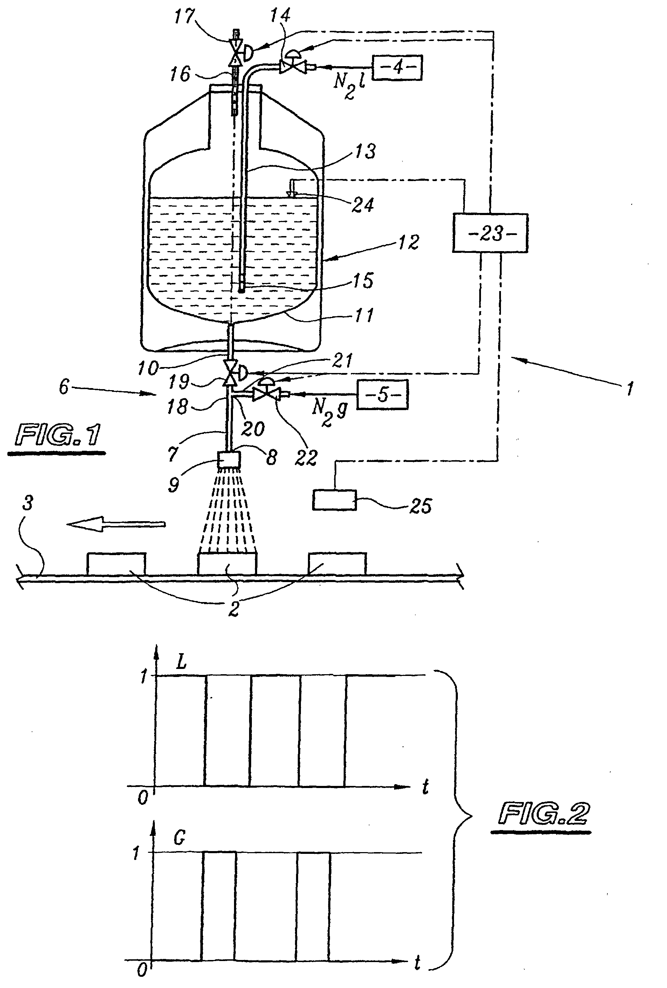

La figure 1 représente une installation 1 de refroidissement de biscuits chocolatés 2 par pulvérisation d'azote liquide sur ceux-ci.

Cette installation comprend des moyens 3 de convoyage sensiblement horizontaux sur lesquels les biscuits 2 sont disposés de manière régulière après fabrication. Les moyens 3 de convoyage peuvent, par exemple, être constitués d'une partie d'un convoyeur final de la ligne de production des biscuits chocolatés.

L'installation de refroidissement comprend également une source d'azote liquide 4 et une source d'azote gazeux 5 reliées à un dispositif 6 de pulvérisation séquentielle d'azote liquide surmontant les moyens 3 de convoyage.

Le dispositif 6 comprend une canalisation sensiblement verticale 7 sous forme d'un tube, dont une sortie 8 est reliée à l'entrée d'une buse 9 de pulvérisation du type FULLJET (marque déposée) à jets de pulvérisation en cône plein. La buse 9 est orientée vers les moyens 3 de convoyage et son axe est sensiblement orthogonal à ceux-ci, c'est-à-dire sensiblement vertical.

L'entrée de la canalisation 7 est reliée, par une conduite 10, au fond 11 d'un réservoir calorifugé 12 contenant de l'azote liquide en équilibre avec sa phase gazeuse.

Ce réservoir 12 est relié, par l'intermédiaire d'une conduite d'alimentation en azote liquide 13 sur laquelle est disposée une électrovanne 14, à la source d'azote liquide 4. L'extrémité aval 15 de la conduite 13 plonge dans l'azote liquide contenu dans le réservoir 12.

Ce réservoir 12 comprend dans sa partie supérieure une conduite 16 de mise à l'air de l'atmosphère gazeuse contenue dans le réservoir 12. La conduite 16 est munie d'une électrovanne 17.

La conduite 10 est raccordée à l'entrée 18 de la canalisation 7 par l'intermédiaire d'une électrovanne 19.

L'entrée 18 de la canalisation 7 est reliée à la source 5 par piquage, immédiatement en aval de l'électrovanne 19, d'une conduite 21 munie d'une électrovanne 22. Ce piquage est repéré par la référence 20 sur la figure 1. Pour la clarté de la représentation, celui-ci a été éloigné de l'électrovanne 19.

L'installation comprend en outre une unité électronique 23 de pilotage de l'ouverture des électrovannes 14, 17, 19 et 22. Cette unité de pilotage 23 est également reliée d'une part à un capteur 24 du niveau d'azote liquide contenu dans le réservoir 12, et d'autre part à un capteur 25 de détection de la présence de biscuits 2 à refroidir, disposé au-dessus des moyens 3 de convoyage, en amont du dispositif 6 de pulvérisation par rapport au sens de déplacement des biscuits 2 matérialisé par une flèche.

La source 5 fournit de l'azote gazeux sec à une pression absolue d'environ 1,5 bar et à température ambiante. La source 4 fournit de l'azote liquide à une pression absolue légèrement supérieure à la pression atmosphérique.

Ces sources 4 et 5 peuvent être constituées par un réseau de fourniture d'azote présent sur le site de production des biscuits, ou par un réservoir d'azote liquide de grande capacité et par des bouteilles d'azote gazeux sous pression.

Pratiquement toute la longueur (quelques centimètres) de la canalisation 7 est comprise entre le piquage en 20 et sa sortie 8 reliée à l'entrée d'alimentation de la buse 9. La distance entre les moyens 3 de convoyage et la sortie de la buse 9 est d'environ 15 cm.

Le fonctionnement de l'installation est le suivant.

Les moyens 3 de convoyage transportent les biscuits 2 sous le dispositif 6 de pulvérisation. Les électrovannes 19 et 22 étant fermées, lorsque le capteur 25 détecte la présence d'un biscuit 2 à refroidir, l'unité de pilotage 23 déclenche l'ouverture de l'électrovanne 19, l'électrovanne 22 restant fermée.

L'entrée 18 de la canalisation 7 est donc raccordée par l'intermédiaire de la conduite 10 au fond 11 du réservoir 12.

Ce réservoir contient de l'azote liquide à la pression atmosphérique. Le niveau d'azote liquide dans ce réservoir est régulé à un niveau sensiblement constant par l'intermédiaire des électrovannes 14 et 17, du capteur 24 et de l'unité de pilotage 23.

L'azote liquide alimentant la canalisation 7 est franc et sa pression relative correspond à la pression hydrostatique de l'azote, qui est d'environ 100 mbars. Cet azote liquide s'écoule dans la canalisation 7, qui se charge ainsi d'une dose d'azote liquide.

Ensuite, l'unité de pilotage 23 commande la fermeture de l'électrovanne 19, puis l'ouverture de l'électrovanne 22, raccordant ainsi l'entrée 18 de la canalisation 7 à la source 5 d'azote gazeux.

L'azote gazeux, de pression absolue d'environ 1,5 bar, s'écoule donc dans la canalisation 7, en poussant la dose d'azote liquide chargée dans celle-ci au travers de la buse 9, provoquant ainsi la pulvérisation de la dose d'azote liquide sur le biscuit 2 détecté.

L'électrovanne 22 est ensuite fermée après fourniture à la canalisation 7 d'une dose d'azote gazeux suffisante pour pulvériser la dose d'azote liquide chargée, et l'installation 1 est prête à refroidir un autre biscuit.

L'azote gazeux ainsi appliqué à la dose d'azote liquide joue le rôle de gaz de propulsion et permet d'atteindre les dimensions de gouttes souhaitées.

Si pour fournir des jets de pulvérisation dans les mêmes conditions, avec des dimensions de gouttes analogues, la buse 9 était alimentée uniquement en azote liquide une alimentation en azote liquide à une pression absolue d'environ 1,5 bar serait nécessaire. Dans le mode de réalisation décrit, le liquide pulvérisé est à une pression absolue relativement faible, de l'ordre de 1,1 bars, et donc à une température plus basse.

On a vérifié expérimentalement que la capacité de refroidissement du jet de pulvérisation d'azote liquide fourni est accrue bien que l'azote gazeux utilisé soit à température ambiante, et donc à une température largement supérieure à celle de l'azote liquide issu du réservoir 12 (environ -196° C).

Les durées d'ouverture des électrovannes 19 et 22 sont, dans le mode de réalisation décrit, respectivement comprises entre 0,3 et 0,5 secondes et entre 0,1 et 0,3 secondes.

D'une manière générale, les durées d'ouverture de l'électrovanne 19 sont entre deux et quatre fois supérieures, et de préférence trois fois supérieures, aux durées d'ouverture de l'électrovanne 22.

Le rôle du réservoir 12 est d'une part d'assurer la fourniture d'azote liquide franc au dispositif 6 de pulvérisation et, d'autre part d'assurer la régulation en pression et en débit de l'azote liquide fourni.

Lorsque les produits à refroidir sont régulièrement disposés sur les moyens de convoyage comme représenté sur la figure 1, l'ouverture des électrovannes 19 et 22 est séquentielle et périodique, comme représenté sur les chronogrammes de la figure 2.

Sur ces chronogrammes, les états I et 0 correspondent respectivement à l'état ouvert et à l'état fermé d'une électrovanne.

Ces chronogrammes permettent de visualiser grâce aux deux courbes, repérées par la lettre L pour l'électrovanne 19 et par la lettre G pour l'électrovanne 22, l'ouverture alternée et séquentielle de ces deux électrovannes.

Ces électrovannes 19 et 22 et l'unité de pilotage 23 permettent de raccorder sélectivement et séquentiellement l'entrée 18 de la canalisation 7 aux sources de gaz et de liquide.

Dans un autre mode de réalisation, les deux électrovannes 19 et 22 peuvent être remplacées par une électrovanne à trois voies et deux positions.

On conçoit que le procédé de pulvérisation séquentielle décrit ci-dessus peut s'appliquer d'une manière générale à l'industrie alimentaire, notamment pour des opérations de refroidissement, éventuellement par pulvérisation sur les supports des produits à refroidir, de croûtage et de congélation.

L'invention peut s'appliquer plus généralement au refroidissement de nombreux types de produits individuels en défilement.

En fonction des applications envisagées, les pressions et températures de l'azote liquide et gazeux alimentant le dispositif 6, les dimensions de la canalisation 7 servant à l'accumulation des doses d'azote liquide, les durées d'ouverture et de fermeture des électrovannes 19 et 22, ainsi que la proportion relative des doses de gaz et de liquide injectées pour chaque pulvérisation, peuvent varier. Ainsi, le procédé décrit peut être mis en oeuvre, par exemple, avec des sources d'azote liquide à une pression absolue de 1,8 bar ou 2 bars (cette pression étant régulée par l'électrovanne 17) et avec des sources d'azote gazeux à des pressions absolues de 1,35 bar, 1,6 bar, 1,7 bar ou 2,5 bars.

D'une manière plus générale, le gaz de propulsion injecté peut être différent du liquide cryogénique à pulvériser. Il s'agit, de préférence, d'un gaz inerte sec.

## Revendications

1. **Procédé de pulvérisation séquentielle** d'un liquide cryogénique, notamment de l'azote liquide, **caractérisé par** la mise en oeuvre des mesures suivantes :
- on dispose d'une canalisation (7) dont une sortie (8) est reliée à une entrée de moyens (9) de pulvérisation ;
- on charge une dose du liquide cryogénique dans la canalisation;
- on dispose d'une dose d'un gaz de propulsion ;
- on applique ladite dose de gaz de propulsion à la dose de liquide cryogénique pour pousser celle-ci et pulvériser ainsi séquentiellement le liquide au travers des moyens de pulvérisation (9) ;
la pression du gaz de propulsion étant supérieure à celle du liquide cryogénique.

2. Procédé selon la revendication 1, **caractérisé en ce que** le gaz. de propulsion est à une température très supérieure à celle du liquide cryogénique, notamment au voisinage de la température ambiante.

3. Procédé selon la revendication 1 ou 2, **caractérisé en ce que** le gaz de propulsion et le liquide cryogénique sont de même composition.

4. **Procédé de refroidissement d'objets** (2), plus particulièrement de produits alimentaires, par pulvérisation sur ceux-ci d'un liquide cryogénique de refroidissement, notamment de l'azote liquide, **caractérisé en ce qu'**on utilise un procédé de pulvérisation séquentielle selon l'une quelconque des revendications 1 à 3 pour pulvériser le liquide cryogénique sur les objets (2) transportés par des moyens (3) de convoyage.

5. **Installation de mise en oeuvre du procédé** selon la revendication 4, **caractérisée en ce qu'**elle comprend des moyens (3) de convoyage des objets, une source de liquide cryogénique de refroidissement (4), une source de gaz de propulsion (5), la pression du gaz de propulsion étant supérieure à celle du liquide cryogénique, et un dispositif (6) de pulvérisation séquentielle du liquide cryogénique de refroidissement, ce dispositif comprenant d'une part une canalisation (7) dont une sortie (8) est reliée à une entrée de moyens (9) de pulvérisation orientés vers lesdits moyens (3) de convoyage, et d'autre part des moyens (10, 19, 21, 22, 23) de distribution raccordant sélectivement et séquentiellement une entrée de ladite canalisation aux sources de gaz et de liquide.

6. Installation selon la revendication 5, **caractérisée en ce que** le gaz de propulsion est à une température très supérieure à celle du liquide cryogénique, notamment au voisinage de la température ambiante.

7. Installation selon la revendication 5 ou 6, **caractérisée en ce que** le gaz de propulsion et le liquide cryogénique sont de même composition.

8. Installation selon l'une quelconque des revendications 5 à 7, **caractérisée en ce que** les moyens de distribution comprennent au moins une électrovanne de distribution (19, 22) commandée par une unité de pilotage (23), et **en ce que** les moyens de pulvérisation comprennent une buse de pulvérisation (9).

9. **Dispositif de pulvérisation séquentielle** de liquide cryogénique pour une installation selon l'une quelconque des revendications 5 à 8, **caractérisé en ce qu'**il comprend d'une part une canalisation (7) dont une sortie (8) est reliée à une entrée de moyens (9) de pulvérisation, et d'autre part des moyens (10, 19, 21, 22, 23) de distribution adaptés pour raccorder sélectivement et séquentiellement une entrée (18) de la canalisation (7) à une source de liquide cryogénique (4) et à une source de gaz de propulsion (5).

10. Dispositif selon la revendication 9, **caractérisé en ce que** les moyens de distribution comprennent au moins une électrovanne de distribution (19, 22) commandée par une unité de pilotage (23), et **en ce que** les moyens de pulvérisation comprennent une buse de pulvérisation (9).

## Patentansprüche

1. Verfahren zum sequentiellen Sprühen einer kryogenen Flüssigkeit, insbesondere flüssigen Stickstoffes, **gekennzeichnet durch** den Einsatz der folgenden Maßnahmen:
- Anbringen einer Kanalisation (7), die an einem Ausgang (8) mit einem Sprühmitteleingang (9) verbunden ist;
- Füllen einer Dosis der kryogenen Flüssigkeit in die Kanalisation;
- Anbringen einer Dosis eines Treibgases;
- Anlegen der Treibgasdosis an die Dosis der kryogenen Flüssigkeit, um diese zu treiben und auf diese Weise sequentiell die Flüssigkeit **durch** die Sprühmittel (9) zu sprühen;
wobei der Treibgasdruck größer als jener der kryogenen Flüssigkeit ist.

2. Verfahren nach Anspruch 1, **dadurch gekennzeichnet, dass** das Treibgas eine wesentlich höhere Temperatur als die kryogene Flüssigkeit, insbesondere in der Nähe der Raumtemperatur, aufweist.

3. Verfahren nach Anspruch 1 oder 2, **dadurch gekennzeichnet, dass** das Treibgas und die kryogene Flüssigkeit die gleiche Zusammensetzung aufweisen.

4. Verfahren zum Kühlen von Objekten (2), insbesondere von Nahrungsmitteln, durch Sprühen einer kryogenen Kühlflüssigkeit, insbesondere flüssigen Stickstoffes, auf diese, **dadurch gekennzeichnet, dass** ein Verfahren zum sequentiellen Sprühen nach einem der Ansprüche 1 bis 3 verwendet wird, um die kryogene Flüssigkeit auf die Objekte (2), die von Fördermitteln (3) transportiert werden, zu sprühen.

5. Anlage für den Einsatz des Verfahrens nach Anspruch 4, **dadurch gekennzeichnet, dass** es Mittel (3) zur Beförderung der Objekte, eine Quelle (4) von kryogener Kühlflüssigkeit, eine Treibgasquelle (5), wobei der Druck des Treibgases höher als jener der kryogenen Flüssigkeit ist, und eine Vorrichtung (6) zum sequentiellen Sprühen der kryogenen Kühlflüssigkeit umfasst, wobei diese Vorrichtung einerseits eine Kanalisation (7), die an einem Ausgang (8) mit einem Eingang von Sprühmitteln (9), die zu den Fördermitteln (3) ausgerichtet sind, verbunden ist, und andererseits Verteilungsmittel (10, 19, 21, 22, 23) umfasst, die einen Eingang der Kanalisation selektiv und sequentiell an die Gas- und Flüssigkeitsquellen anschließen.

6. Anlage nach Anspruch 5, **dadurch gekennzeichnet, dass** das Treibgas eine wesentlich höhere Temperatur als jene der kryogenen Flüssigkeit, insbesondere in der Nähe der Raumtemperatur, aufweist.

7. Anlage nach Anspruch 5 oder 6, **dadurch gekennzeichnet, dass** das Treibgas und die kryogene Flüssigkeit die gleiche Zusammensetzung haben.

8. Anlage nach einem der Ansprüche 5 bis 7, **dadurch gekennzeichnet, dass** die Verteilungsmittel mindestens ein Magnetverteilungsventil (19, 22) umfassen, das von einer Steuereinheit (23) gesteuert wird, und dass die Sprühmittel eine Sprühdüse (9) umfassen.

9. Vorrichtung zum sequentiellen Sprühen einer kryogenen Flüssigkeit für eine Anlage nach einem der Ansprüche 5 bis 8, '**dadurch gekennzeichnet, dass** sie einerseits eine Kanalisation (7), die an einem Ausgang (8) mit einem Sprühmitteleingang (9) verbunden ist, und andererseits Verteilungsmittel (10, 19, 21, 22, 23) umfasst, die derart ausgeführt sind, dass sie einen Eingang (18) der Kanalisation (7) selektiv und sequentiell an eine Quelle von kryogener Flüssigkeit (4) und an eine Treibgasquelle (5) anschließen.

10. Vorrichtung nach Anspruch 9, **dadurch gekennzeichnet, dass** die Verteilungsmittel mindestens ein Magnetverteilungsventil (19, 22) umfassen, das von einer Steuereinheit (23) gesteuert wird, und dass die Sprühmittel eine Sprühdüse (9) umfassen.

## Claims

1. Method of sequentially spraying a cryogenic liquid, in particular liquid nitrogen, **characterized by** implementing the following provisions:
- there is a duct (7), an outlet (8) of which is connected to an inlet of spraying means (9);
- the duct is filled with a dose of the cryogenic liquid;
- there is a dose of a propellant gas;
the said dose of propellant gas is applied to the dose of cryogenic liquid, in order to push the latter and thus sequentially spray the liquid through the spraying means (9);
the pressure of the propellant gas being greater than that of the cryogenic liquid.

2. Method according to Claim 1, **characterized in that** the propellant gas is at a temperature very much greater than that of the cryogenic liquid, in particular close to ambient temperature.

3. Method according to Claim 1 or 2, **characterized in that** the propellant gas and the cryogenic liquid are of the same composition.

4. Method of cooling objects (2), more particularly food products, by spraying a cryogenic coolant, in particular liquid nitrogen, onto them, **characterized in that** use is made of a sequential spraying method according to any one of Claims 1 to 3 in order to spray the cryogenic liquid onto the objects (2) which are being carried by conveyor means (3).

5. Installation for implementing the method according to Claim 4, **characterized in that** it comprises means (3) for conveying the objects, a source of cryogenic coolant (4), a source of propellant gas (5), the pressure of the propellant gas being greater than that of the cryogenic liquid, and a device (6) for sequentially spraying the cryogenic coolant, this device comprising, on the one hand, a duct (7) of which an outlet (8) is connected to an inlet of spraying means (9) directed at the said conveyor means (3), and on the other hand distribution means (10, 19, 21, 22, 23) which selectively and sequentially connect an inlet of the said duct to the gas and liquid sources.

6. Installation according to Claim 5, **characterized in that** the propellant gas is at a temperature very much greater than that of the cryogenic liquid, in particular close to ambient temperature.

7. Installation according to Claim 5 or 6, **characterized in that** the propellant gas and the cryogenic liquid are of the same composition.

8. Installation according to any one of Claims 5 to 7, **characterized in that** the distribution means comprise at least one distribution solenoid valve (19, 22) controlled by a drive unit (23), and **in that** the spraying means comprise a spray nozzle (9).

9. Device for sequentially spraying cryogenic liquid, for an installation according to any one of Claims 5 to 8, **characterized in that** it comprises, on the one hand, a duct (7), an outlet (8) of which is connected to an inlet of spraying means (9), and, on the other hand, distribution means (10, 19, 21, 22, 23) designed to selectively and sequentially connect an inlet (18) of the duct (7) to a cryogenic liquid source (4) and to a propellant gas source (5).

10. Device according to Claim 9, **characterized in that** the distribution means comprise at least one distribution solenoid valve (19, 22) controlled by a drive unit (23), and **in that** the spraying means comprise a spray nozzle (9).
